# FASCICULE DE BREVET EUROPEEN

(11) **EP 2 588 783 B1**
(45) Date de publication et mention de la délivrance du brevet: **19.10.2016**
(21) Numéro de dépôt: 11741613.1
(22) Date de dépôt: 27.06.2011
(51) Int. Cl.: F02M 26/70

(54) **VANNE DE CIRCULATION DE FLUIDE**
FLÜSSIGKEITSVENTIL
FLUID VALVE

(30) Priorité: 30.06.2010 FR 1002775
(43) Date de publication de la demande: 08.05.2013
(73) Titulaire: Valeo Systèmes de Contrôle Moteur, 95800 Cergy (FR)
(72) Inventeur: ADENOT, Sébastien, F-95300 Pontoise (FR); HODEBOURG, Grégory, F-78500 Sartrouville (FR)
(74) Mandataire: Cardon, Nicolas
(86) Numéro de dépôt international: PCT/FR2011/051487
(87) Numéro de publication internationale: WO 2012/001284

(56) Documents cités:
- DE-A1- 4 319 015
- FR-A1- 2 933 469
- US-A1- 2002 109 117
- US-A1- 2007 246 009
- GERARD KNEPPERS AND CALLISTO GENCO: "Valve ststem for controlling fluid flow", RESEARCH DISCLOSURE, MASON PUBLICATIONS, HAMPSHIRE, GB, vol. 474, no. 63, 1 octobre 2003 (2003-10-01), XP007132943, ISSN: 0374-4353

## Description

La présente invention concerne une vanne de circulation de fluide. Il pourra s'agir, notamment, de gaz d'échappement d'un moteur de véhicule automobile, d'air destiné à l'admission du moteur ou d'un mélange d'air et de gaz d'échappement.

Ladite vanne pourra ainsi servir à régler un débit de gaz d'échappement destiné à être recirculé vers la ligne d'admission en air du moteur. En particulier, elle pourra être utilisée dans des architectures moteur, notamment diesel, à turbo compresseur, ladite vanne étant prévue sur la ligne d'échappement du moteur en aval de la turbine du turbo compresseur pour prélever une partie des gaz.

Actuellement, il est connu des vannes comprenant un corps, définissant un conduit, et un volet mobile en rotation autour d'un axe entre une position, dite de fermeture, empêchant l'écoulement du fluide dans le conduit, et une position d'ouverture, permettant l'écoulement du fluide dans le conduit.

FR2933469 décrit une telle vanne, selon le préambule de la revendication 1.

Un problème rencontré avec les vannes connus est l'augmentation trop rapide du débit dans les premiers degrés d'ouverture du volet. Dès que le volet commence à quitter sa position de fermeture, la surface qui se libère pour le passage du fluide croit rapidement. La progressivité de l'ouverture est donc limitée ce qui restreint les utilisations de la vanne et complique sa commande.

US2007246009 décrit une vanne avec une progressivité d'ouverture particulière.

L'invention se propose de pallier les inconvénients précités et concerne une vanne de circulation de fluide, notamment de gaz d'échappement d'un moteur de véhicule automobile, comprenant un corps, définissant au moins conduit, et un volet mobile en rotation autour d'un axe entre une position, dite de fermeture, empêchant l'écoulement du fluide dans le conduit, et une position d'ouverture, permettant l'écoulement du fluide dans le conduit.

Selon l'invention, la vanne présente un jeu d'ouverture entre le volet et une paroi dudit corps pour le passage du fluide, ledit jeu s'étendant selon une direction parallèle à l'axe d'articulation du volet selon une longueur variant en fonction de la position angulaire du volet.

La surface laissée libre pour le passage du fluide pourra ainsi être ajustée, en fonction des besoins de progressivité. En particulier, elle pourra être ajustée pour que, dans les premiers degrés d'ouverture de volet, la surface augmente de façon la plus progressive possible sans plus être uniquement fonction du périmètre du volet.

Selon l'invention, la vanne comprend un conduit principal et un conduit auxiliaire d'écoulement du fluide, ledit conduit auxiliaire débouchant dans ledit conduit principal, le volet étant prévu apte à empêcher la communication entre les deux conduits en position de fermeture, et à permettre la mise en communication desdits conduits en position d'ouverture et ladite paroi entre le volet et laquelle est prévu le jeu d'ouverture est située au niveau dudit conduit auxiliaire.

Selon différents modes de réalisation :
- la longueur du jeu d'ouverture suit l'une et/ou l'autre des lois suivantes :
   - la longueur du jeu est nulle en position de fermeture du volet,
   - la longueur du jeu augmente avec un angle d'ouverture du volet,
   - la longueur du jeu augmente de façon non proportionnelle à l'angle d'ouverture du volet,
   - la longueur du jeu augmente plus rapidement au début de l'ouverture du volet qu'à la fin,
   - la longueur du jeu est maximale en position d'ouverture maximale du volet ;
- ladite paroi comprend une première portion au contact de laquelle le volet se trouve entre sa position d'ouverture et sa position de fermeture, et une seconde portion s'étendant, selon la direction de l'axe d'articulation du volet, depuis ladite première portion, ladite seconde portion présentant une concavité plus faible que celle de ladite première portion de façon définir ledit jeu d'ouverture ;
- l'axe de rotation du volet est excentré et le volet est orienté selon un plan tangentiel à un cylindre centré sur ledit axe ;
- ladite première portion présente un profil s'inscrivant dans un cylindre dont l'axe est l'axe de rotation du volet ;
- ledit volet présente une arrête, orientée selon ledit axe d'articulation, au niveau de laquelle est prévu ledit jeu d'ouverture, et ladite arrête est droite, la paroi entre ladite arrête droite et laquelle est prévu le jeu d'ouverture étant configurée pour définir ledit jeu ;
- ledit volet présente une première aile, dite aile d'obturation, permettant de fermer ladite fenêtre de passage, lorsque le volet est en position de fermeture, et une seconde aile, dite autre aile, permettant de fermer au moins partiellement ledit premier conduit, lorsque le volet est en positon d'ouverture ;
- ladite aile d'obturation présente ladite arrête droite ;
- ladite vanne comprend en outre un joint d'étanchéité, ledit joint présentant une ouverture pour le passage du fluide, l'aile d'obturation étant apte à obturer, au moins en partie, ladite ouverture du joint, lorsque le volet est dans une position de fermeture, ladite aile d'obturation et l'autre desdites ailes étant prévues de part et d'autre du joint, lorsque le volet est en position de fermeture et ledit volet comprenant une zone intermédiaire, reliant ladite première et ladite seconde aile, traversant ladite ouverture du joint ;
- ledit joint comprend une zone plane présentant une surface contre laquelle ladite aile d'obturation vient en appui par l'une de ses faces, prévue plane, dit face d'appui de l'aile d'obturation, et une surface opposée contre laquelle l'autre aile du volet vient en appui, par l'une de ses faces, prévue plane, dite face d'appui de l'autre aile, lorsque le volet est en position de fermeture, ladite ouverture pour le passage du fluide prévue dans le joint étant positionnée au niveau de ladite zone plane ;
- ladite surface d'appui de l'aile d'obturation et ladite surface d'appui de l'autre aile du volet s'étendent selon deux plans parallèles distants l'uns de l'autre ;
- lesdits plans sont distants d'une dimension correspondant à l'épaisseur du joint dans ladite zone plane ;
- l'autre aile du volet présente une surface opposée à sa surface d'appui, plane, et la zone intermédiaire présente un pan incliné entre la face d'appui de l'aile d'obturation et ladite face opposée ;
- selon la direction de l'axe d'articulation du volet, ladite aile d'obturation présente une dimension s'étendant de part et d'autre au-delà de la dimension selon laquelle s'étend la zone intermédiaire, au moins au niveau d'une zone de jonction entre ladite zone intermédiaire et ladite aile d'obturation ;
- ledit joint présente un bossage le long d'une partie de l'ouverture de passage, prévue en vis-à-vis de l'autre aile du volet quand celui-ci est en position de fermeture, ledit bossage étant configuré pour être comprimé par ladite autre aile du volet quand celui-ci est en position de fermeture ;
- ledit joint présente une zone borgne, située en vis-à-vis de ladite autre aile lorsque le volet est en position de fermeture ;
- ledit corps comprend un logement pour un moteur d'actionnement du volet, ledit corps étant configuré pour définir une lame d'air entre ladite zone borgne du joint et ledit logement.

L'invention sera mieux comprise à la lumière de la description suivante qui n'est donnée qu'à titre indicatif et qui n'a pas pour but de la limiter, accompagnée des dessins joints parmi lesquels :
- la figure 1 illustre en perspective un exemple de réalisation d'une vanne conforme à l'invention,
- la figure 2 illustre en perspective une partie de la vanne de la figure 1,
- la figure 3 est une vue de coupe de la vanne des figures précédentes, la coupe étant effectuée selon un plan de coupe orthogonale à l'axe d'articulation du volet, le volet étant en position partiellement ouverte,
- la figure 4 illustre en perspective le joint d'étanchéité et le volet de la vanne des figures précédentes, le volet étant en position de fermeture.

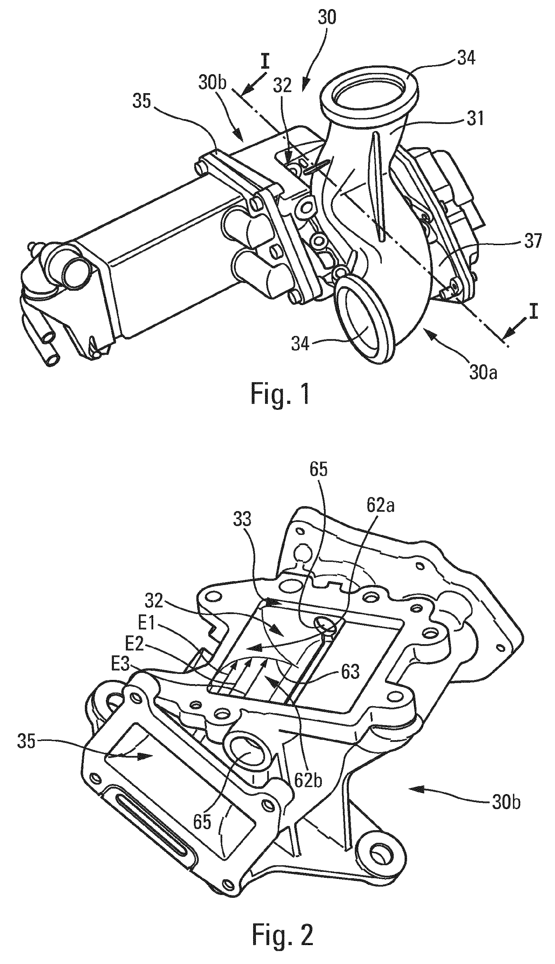

Comme illustré aux figures 1 à 3, l'invention concerne une vanne de circulation de fluide, notamment de gaz d'échappement d'un moteur de véhicule automobile, comprenant un corps 30 définissant au moins un conduit pour l'écoulement du fluide et un volet 1.

Dans le mode de réalisation illustré, ledit corps 30 définit un conduit principale 31 et un conduit auxiliaire 32 d'écoulement du fluide, débouchant dans ledit conduit principale 31. Le conduit principal 31 présente des orifices 34 d'entrée et de sortie communiquant, dans un exemple d'application, avec la ligne d'échappement d'un moteur. Le conduit auxiliaire présente un orifice 35 communiquant avec une ligne de recirculation de gaz d'échappement.

Le volet 1 est mobile en rotation autour d'un axe 16, comme cela est illustré par la flèche repéré 22, entre une position, dite de fermeture, empêchant l'écoulement du fluide dans l'un des conduits et une position d'ouverture, permettant l'écoulement du fluide dans ledit conduit.

En particulier, dans le mode de réalisation, illustré, la position de fermeture, empêche la communication entre les deux conduits 31, 32, et la position d'ouverture permet la mise en communication desdits conduits 31, 32, par exemple au niveau d'une fenêtre 33 de passage du fluide, permettant de la sorte l'écoulement du fluide dans le conduit auxiliaire 32 depuis ledit conduit principal 31.

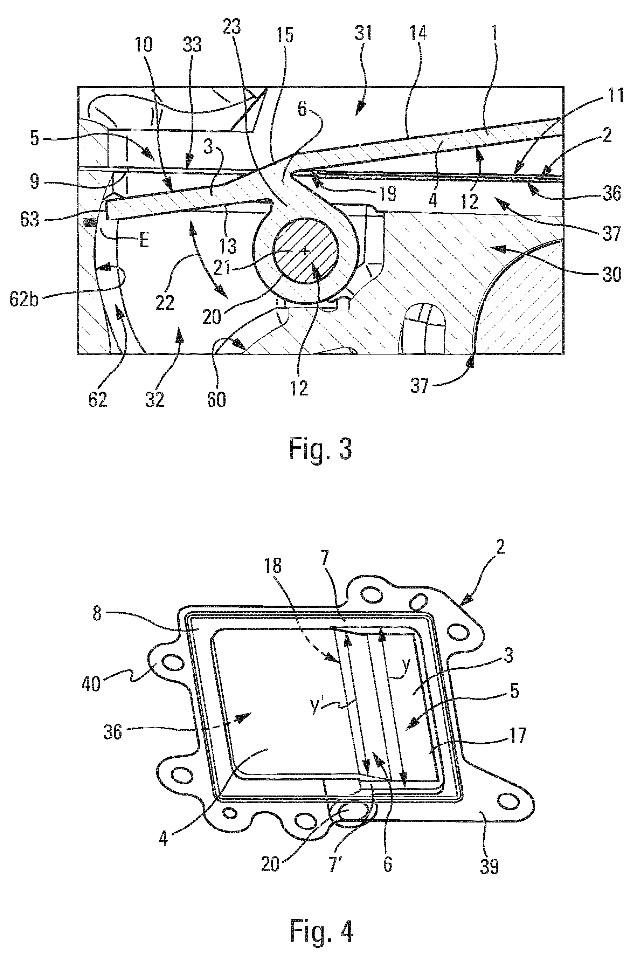

Dans sa position d'ouverture, représenté à la figure 3, le volet 1 est positionné de façon transversale par rapport à ladite fenêtre 33. Dans le mode de réalisation illustré, le volet 1 est positionné de façon incliné par rapport à la fenêtre 33 dans sa position d'ouverture maximale, non représentée, par exemple au niveau de butée 60.

Selon l'invention, la vanne présente un jeu d'ouverture E entre le volet 1 et une paroi 62 dudit conduit pour le passage du fluide, ici le conduit 32, ledit jeu E s'étendant selon une direction parallèle à l'axe d'articulation 16 du volet 1, selon une longueur variant en fonction de la position angulaire du volet.

Cela est plus particulièrement illustré à la figure 2 où l'on voit le jeu E illustré pour différentes valeurs de position angulaire du volet. Sur la figure, trois valeurs croissantes E1, E2, E3 du jeu d'ouverture E ont été mises en évidence.

La surface s'ouvrant pour le passage du fluide, au fur et à mesure de la rotation du volet, est ainsi déterminée non plus seulement par l'angle d'ouverture et la distance entre le volet et la paroi se trouvant en vis-à-vis mais aussi par la longueur du jeu d'ouverture E, que l'on pourra choisir selon la progressivité de débit que l'on veut donner à la vanne.

La longueur du jeu E suit l'une et/ou l'autre des lois suivantes :
- elle est nulle en position de fermeture du volet,
- elle augmente avec un angle d'ouverture du volet,
- elle augmente de façon non proportionnelle à l'angle d'ouverture du volet,
- elle augmente plus rapidement au début de l'ouverture du volet qu'à la fin,
- elle est maximale en position d'ouverture maximale du volet.

La paroi 62 comprend, par exemple, une première portion 62a au contact de laquelle le volet se trouve, aux jeux de montage près, entre sa position d'ouverture et sa position de fermeture, et une seconde portion 62b s'étendant, selon la direction de l'axe d'articulation du volet, depuis ladite première portion 62a. Ladite seconde portion présente une concavité plus faible que celle de ladite première portion de façon définir ledit jeu d'ouverture E. Autrement dit, au niveau de la portion 62a, il n'y a pas de passage de fluide entre la paroi 62 et le volet 1, ou alors uniquement un débit de fuite, tandis que le fluide peut passer entre le volet 1 et la paroi 62 au niveau de la portion 62b de celle-ci.

Ladite première portion 62a et ladite seconde portion 62b sont prévues de part et d'autre d'une ligne de raccordement 63, d'allure courbe, par exemple elliptique. On obtient de la sorte les lois de progression du jeu E définies plus haut.

Comme plus particulièrement visible à la figure 3, l'axe de rotation 16 du volet est, par exemple, excentré et le volet 1 est orienté selon un plan tangentiel à un cylindre centré sur ledit axe.

Ladite première portion 62a présente, notamment, un profil s'inscrivant dans un cylindre dont l'axe est l'axe de rotation du volet. Et ledit cylindre présente un rayon donné par la distance entre ledit axe 16 d'articulation du volet et un bord distal ou arrête 63 du volet 1, parallèle à l'axe 16 d'articulation du volet.

La paroi 62 est prévue, par exemple au niveau du conduit auxiliaire 32 et le jeu d'ouverture E est situé entre l'arrête 63 du volet et ladite paroi 62, au niveau de sa portion 62b. Ladite arrête 33 est, par exemple, droite et la paroi 62 du conduit auxiliaire est configurée pour définir ledit jeu E.

Dans le mode de réalisation illustré, le conduit auxiliaire 32 forme un coude en direction de l'orifice 35 et la portion 62a de la paroi 62, empêchant le passage du fluide, est prévue du côté opposé à la direction prise par le coude, pour limiter les pertes de charges. D'autres configurations sont bien sûr envisageables en fonction de la direction donné au conduit auxiliaire 32, notamment des configurations où la portion 62a de la paroi 62 empêchant le passage du fluide est en plusieurs parties.

Le volet 1 est muni, par exemple, d'une première aile 3 et d'une deuxième aile 4. Ladite première aile 3, dite aile d'obturation, permet de fermer la fenêtre 33 du corps, lorsque le volet 1 est en position de fermeture, et ladite seconde aile 4, dite autre aile, permet de fermer au moins partiellement ledit premier conduit 31, lorsque le volet est en positon d'ouverture.

Ladite arrête 33, mobile en vis-à-vis de la paroi 62 définissant le jeu E est prévue, par exemple, au niveau de ladite aile d'obturation 3. En position de fermeture du volet 1, le jeu d'ouverture E est nulle et l'arrête 33 est au contact de la paroi 62 sur toute la longueur de ladite arrête 33. En position d'ouverture maximale, le jeu d'ouverture est prévu, par exemple, tout le long de ladite arrête 33. Autrement dit, il y a écoulement du fluide entre le volet 1 et la paroi 62 au niveau de toute la longueur de l'arrête 33. Dans une position intermédiaire, l'écoulement n'a lieu qu'au niveau d'une partie de ladite arrête 33 (voir figure 3).

Ledit corps 30 pourra être réalisé en deux parties 30a, 30b, chaque partie définissant un desdits conduits 31, 32, et présentant une ouverture venant en correspondance pour définir ladite fenêtre 33. On entend par là que lesdites deux parties du corps 30 sont distinctes, assujetties l'une à l'autre.

Lesdites deux parties 30a, 30b sont, par exemple, issues de fonderie. A ce sujet, lesdites portions 62a, 62b sont prévues au niveau d'une seule et même pièce, en l'occurrence la partie 30b de la vanne et la ligne de raccordement 63 évoquée plus haut est une ligne fictive.

Un joint 2 est prévu, par exemple, entre lesdites deux parties au niveau de ladite fenêtre 33 pour jouer un rôle d'étanchéité entre lesdites deux parties 30a, 30b vis-à-vis de l'extérieur de la vanne.

Ledit joint 2 présente une ouverture 5 pour le passage du fluide du conduit 31 à l'autre 32. Ladite ouverture 5 du joint est prévue, notamment, en vis-à-vis de la fenêtre 33 du corps 30.

Ledit joint 2 présente, notamment, une zone borgne 36, située en vis-à-vis de ladite autre aile 4 lorsque le volet 1 est en position de fermeture. Autrement dit, l'ouverture 5 du joint n'est prévue qu'au niveau de l'aile d'obturation 3, le volet 1 étant en position de fermeture.

Dans une position d'ouverture du volet, ladite première 3 et ladite seconde aile 4 s'étendent d'un côté et de l'autre du joint d'étanchéité 2, de façon transversale à celui-ci pour laisser passer le fluide.

Comme illustré à la figure 4, ladite aile d'obturation 3 et l'autre 4 desdites ailes sont prévues, par exemple, de part et d'autre du joint 2, lorsque le volet est en position de fermeture, et ledit volet 2 comprend une zone intermédiaire 6, reliant ladite première 3 et ladite seconde 4 aile, traversant ladite ouverture du joint, par exemple de façon affleurante, au niveau de zones 7, 7' du contour de ladite ouverture 5 du joint.

On peut ainsi obtenir une étanchéité autour de l'ouverture 5 du joint tout en autorisant le débattement du volet entre sa position d'ouverture et sa position de fermeture sans avoir à laisser des jeux importants entre l'ouverture du joint et le contour du volet.

Ledit joint 2 comprend une zone plane 8 et, si l'on revient à la figure 3, on constate que ladite zone plane présente une surface 9 contre laquelle ladite aile d'obturation 3 vient en appui par l'une 10 de ses faces, prévue plane, dit face d'appui de l'aile d'obturation, et/ou une surface opposée 11 contre laquelle l'autre aile 4 du volet vient en appui, par l'une 12 de ses faces, prévue plane, dite face d'appui de l'autre aile, lorsque le volet est en position de fermeture. Ladite ouverture 5 pour le passage du fluide prévue dans le joint 2 est positionnée au niveau de ladite zone plane 8. L'étanchéité est ainsi réalisée par un contact face contre face au niveau de la ou desdites ailes.

Ladite zone borgne 36 du joint 2 pourra aussi être localisée au niveau de ladite zone plane 8 dudit joint 2 dans laquelle est formée l'ouverture 5 dudit joint.

Ladite surface d'appui 10 de l'aile d'obturation et ladite surface d'appui 12 de l'autre aile du volet s'étendent, par exemple, selon deux plans parallèles distants l'un de l'autre, par exemple d'une dimension correspondant à l'épaisseur du joint dans ladite zone plane 8. On peut ainsi assurer des contacts du type plan sur plan.

L'aile d'obturation 3 présente une surface 13, opposée à sa surface d'appui 10, et l'autre aile 4 présente une surface 14 opposée à sa surface d'appui 12. Ces deux faces opposées 13, 14 sont, par exemple, planes et la zone intermédiaire 6 présente un pan incliné 15 entre la face d'appui 10 de l'aile d'obturation 3 et ladite face opposée 14 de l'autre aile 4. On favorise de la sorte l'écoulement du fluide à la surface du volet.

Ledit joint 2 pourra présenter un bossage 19 le long d'une partie de l'ouverture 5 du joint, prévu en vis-à-vis de l'autre aile 4 du volet, quand celui-ci est en position de fermeture. Ledit bossage est configuré pour être comprimé par ladite autre aile 4 du volet quand celui-ci est en position de fermeture. Ceci améliore encore l'étanchéité.

L'axe d'articulation 16 du volet 1 est situé, notamment, à proximité de la zone intermédiaire 6 du volet. Le volet 1 présente, par exemple, un logement 20 pour un arbre 21 d'articulation. Ledit logement se trouve, par exemple, dans une extension 23 du volet, localisée, notamment, dans la zone intermédiaire 6. Dans un tel mode de réalisation, ladite extension 23 s'étend depuis la face opposée 13 à la face d'appui 10 de l'aile d'obturation et depuis la face d'appui 12 de l'autre aile 4 du volet.

Le logement 20 est ici traversant et l'arbre 21 débouche de part et d'autre du logement 20. L'arbre 21 est relié à l'extension 23 de façon connue en soi. Il est articulé par rapport au corps 30 au niveau de logements 65, ménagés dans celui-ci.

L'aile d'obturation 3, l'autre aile 4, la zone intermédiaire 6 et son extension 23 forment, par exemple, une pièce unique, notamment issue de fonderie.

Tel que cela est illustré à la figure 4, selon la direction de l'axe d'articulation du volet, ladite aile d'obturation présente une dimension y s'étendant de part et d'autre au-delà de la dimension y' selon laquelle s'étend la zone intermédiaire 6, au moins au niveau d'une zone de jonction entre ladite zone intermédiaire et ladite aile d'obturation. La surface d'appui 10 de l'aile d'obturation 3 peut ainsi présenter une zone de contact 17, sous la forme d'une portion angulaire d'anneau, avec le joint 2, sur une première partie de la périphérie de l'ouverture 5 du joint, d'un côté dudit joint, tandis que la surface d'appui 12 de l'autre aile 4 présente, de l'autre côté du joint, une zone de contact 18, sur une partie complémentaire de la périphérie de l'ouverture 5 du joint.

La zone de contact 17 offerte par l'aile d'obturation 3 s'étend aussi, par exemple, au droit de la zone intermédiaire 6, au niveau des zones 7, 7'. On renforce ainsi l'étanchéité et on pourrait avoir une zone intermédiaire 6 qui n'affleure pas le contour de l'ouverture 5 du joint.

L'ouverture 5 du volet présente un contour sensiblement rectangulaire, de même que le volet d'obturation 3. Et la zone de contact 17 de ladite aile d'obturation 3 s'étend le long de trois des côtés de ladite ouverture. Quant à la zone de contact 18, elle s'étend le long du dernier côté. Ladite zone intermédiaire 6 est prévue en vis-à-vis du contour de ladite ouverture 5 sur une partie de deux de ses côtés opposés. Ledit autre volet 4 pourra être lui aussi rectangulaire.

Le joint 2 présente, par exemple, une partie périphérique 39 et ladite zone plane 8 est située en retrait de la partie périphérique. Un tel joint est obtenu, par exemple, par emboutissage. Ladite partie périphérique 39 pourra présenter des extensions 40 faisant bride d'accrochage sur le corps 30.

Ledit corps 30 comprend en outre, par exemple, un logement 37 pour un moteur d'actionnement du volet. Et ladite vanne pourra comprendre un système de transmission, non-représenté, entre un arbre de sortie du moteur et l'arbre 21 d'articulation du volet.

La vanne est configurée pour que le volet 1, notamment l'autre aile 4 fasse écran thermique pour le moteur d'actionnement.

Dans le même but, comme visible aux figures 2 et 3, ledit corps 30 est configuré pour définir une lame de fluide 38 entre ledit joint 2 et ledit logement 37, notamment entre ladite zone borgne 36 du joint et ledit logement 37.

## Revendications

1. Vanne de circulation de fluide, notamment de gaz d'échappement d'un moteur de véhicule automobile, comprenant un corps (30), définissant au moins un conduit (32), et un volet (1) mobile en rotation autour d'un axe (16) entre une position, dite de fermeture, empêchant l'écoulement du fluide dans le conduit (32), et une position d'ouverture, permettant l'écoulement du fluide dans le conduit (32), la vanne présentant un jeu d'ouverture (E1, E2, E3) entre le volet (1) et une paroi (62) dudit corps (30) pour le passage du fluide, la vanne comprenant un conduit principal (31) et un conduit auxiliaire (32) d'écoulement du fluide, débouchant dans ledit conduit principal (31), le conduit principal (31) présentant des orifices (34) d'entrée et de sortie aptes à communiquer avec la ligne d'échappement d'un moteur, le conduit auxiliaire présentant un orifice (35) apte à communiquer avec une ligne de recirculation de gaz d'échappement, le volet (1) étant prévu apte à empêcher la communication entre les deux conduits (31, 32) en position de fermeture, et à permettre la mise en communication desdits conduits (31, 32) en position d'ouverture, au niveau d'une fenêtre de passage (33) du fluide, la vanne étant **caractérisée en ce que** ledit jeu (E1, E2, E3) s'étend selon une direction parallèle à l'axe (16) d'articulation du volet (1) selon une longueur variant en fonction de la position angulaire du volet (1) et **en ce que** ladite paroi (62) entre le volet (1) et laquelle est prévu ledit jeu d'ouverture (E1, E2, E3) est située au niveau dudit conduit auxiliaire (32).

2. Vanne selon la revendication 1 dans laquelle la longueur du jeu d'ouverture (E1, E2, E3) suit l'une et/ou l'autre des lois suivantes :
- la longueur du jeu (E1, E2, E3) est nulle en position de fermeture du volet,
- la longueur du jeu (E1, E2, E3) augmente avec un angle d'ouverture du volet,
- la longueur du jeu (E1, E2, E3) augmente de façon non proportionnelle à l'angle d'ouverture du volet,
- la longueur du jeu (E1, E2, E3) augmente plus rapidement au début de l'ouverture du volet qu'à la fin,
- la longueur du jeu (E1, E2, E3) est maximale en position d'ouverture maximale du volet.

3. Vanne selon l'une des revendications 1 ou 2 dans laquelle ladite paroi (62) comprend une première portion (62a) au contact de laquelle le volet (1) se trouve entre sa position d'ouverture et sa position de fermeture, et une seconde portion (62b) s'étendant, selon la direction de l'axe d'articulation (16) du volet, depuis ladite première portion, ladite seconde portion (62b) présentant une concavité plus faible que celle de ladite première portion de façon définir ledit jeu d'ouverture (E1, E2, E3).

4. Vanne selon la revendication 3 dans laquelle l'axe de rotation (16) du volet (1) est excentré et le volet (1) est orienté selon un plan tangentiel à un cylindre centré sur ledit axe.

5. Vanne selon l'une des revendications 3 ou 4 dans laquelle ladite première portion (62a) présente un profil s'inscrivant dans un cylindre dont l'axe est l'axe de rotation du volet.

6. Vanne selon l'une quelconque des revendications précédentes, dans laquelle ledit volet (1) présente une arrête (63), orientée selon ledit axe d'articulation (16), au niveau de laquelle est prévu ledit jeu d'ouverture (E1, E2, E3), et ladite arrête (63) est droite, la paroi (62) entre ladite arrête droite (63) et laquelle ledit jeu d'ouverture (E1, E2, E3) est prévu étant configurée pour définir ledit jeu.

7. Vanne selon l'une quelconque des revendications précédentes, dans laquelle ledit volet présente une première aile (3), dite aile d'obturation, permettant de fermer ladite fenêtre de passage (33), lorsque le volet (1) est en position de fermeture, et une seconde aile (4), dite autre aile, permettant de fermer au moins partiellement ledit premier conduit (31), lorsque le volet (1) est en positon d'ouverture.

8. Vanne selon la revendication 7 dans laquelle ledit volet d'obturation (3) présente ladite arrête droite (63).

## Patentansprüche

1. Fluiddurchflussventil, insbesondere für Abgas eines Kraftfahrzeugmotors, das einen Körper (30), der mindestens einen Kanal (32) definiert, und eine um eine Achse (16) zwischen einer so genannten Schließstellung, die das Fließen des Fluids im Kanal (32) verhindert, und einer Öffnungsstellung, die das Fließen des Fluids im Kanal (32) erlaubt, drehbewegliche Klappe (1) enthält, wobei das Ventil ein Öffnungsspiel (E1, E2, E3) zwischen der Klappe (1) und einer Wand (62) des Körpers (30) für den Durchlass des Fluids aufweist, wobei das Ventil einen Hauptkanal (31) und einen Hilfskanal (32) für das Fließen des Fluids enthält, der in den Hauptkanal (31) mündet, wobei der Hauptkanal (31) Eingangs- und Ausgangsöffnungen (34) aufweist, die mit der Abgasanlage eines Motors in Verbindung stehen können, wobei der Hilfskanal eine Öffnung (35) aufweist, die mit einer Abgas-Rückführleitung in Verbindung stehen kann, wobei die Klappe (1) vorgesehen ist, die Verbindung zwischen den zwei Kanälen (31, 32) in der Schließstellung zu verhindern und das Verbinden der Kanäle (31, 32) in der Öffnungsstellung im Bereich eines Durchlassfensters (33) des Fluids zu erlauben, wobei das Ventil **dadurch gekennzeichnet ist, dass** das Spiel (E1, E2, E3) sich gemäß einer Richtung parallel zur Gelenkachse (16) der Klappe (1) gemäß einer Länge erstreckt, die abhängig von der Winkelstellung der Klappe (1) variiert, und dass die Wand (62), zwischen der Klappe (1) und der das Öffnungsspiel (E1, E2, E3) vorgesehen ist, sich im Bereich des Hilfskanals (32) befindet.

2. Ventil nach Anspruch 1, wobei die Länge des Öffnungsspiels (E1, E2, E3) dem einen und/oder anderen der folgenden Gesetze folgt:
- die Länge des Spiels (E1, E2, E3) ist Null in der Schließstellung der Klappe,
- die Länge des Spiels (E1, E2, E3) nimmt mit einem Öffnungswinkel der Klappe zu,
- die Länge des Spiels (E1, E2, E3) nimmt in zum Öffnungswinkel der Klappe nicht proportionaler Weise zu,
- die Länge des Spiels (E1, E2, E3) nimmt zu Beginn des Öffnens der Klappe schneller zu als am Ende,
- die Länge des Spiels (E1, E2, E3) ist in der maximalen Öffnungsstellung der Klappe maximal.

3. Ventil nach einem der Ansprüche 1 oder 2, wobei die Wand (62) einen ersten Abschnitt (62a), in Kontakt mit welchem die Klappe (1) sich zwischen ihrer Öffnungsstellung und ihrer Schließstellung befindet, und einen zweiten Abschnitt (62b) enthält, der sich gemäß der Richtung der Gelenkachse (16) der Klappe vom ersten Abschnitt aus erstreckt, wobei der zweite Abschnitt (62b) eine schwächere Konkavität als diejenige des ersten Abschnitts aufweist, um das Öffnungsspiel (E1, E2, E3) zu definieren.

4. Ventil nach Anspruch 3, wobei die Drehachse (16) der Klappe (1) außermittig und die Klappe (1) gemäß einer Ebene tangential zu einem Zylinder ausgerichtet ist, der auf die Achse zentriert ist.

5. Ventil nach einem der Ansprüche 3 oder 4, wobei der erste Abschnitt (62a) ein Profil aufweist, das innerhalb eines Zylinders liegt, dessen Achse die Drehachse der Klappe ist.

6. Ventil nach einem der vorhergehenden Ansprüche, wobei die Klappe (1) eine Kante (63) aufweist, die gemäß der Gelenkachse (16) ausgerichtet ist, in deren Bereich das Öffnungsspiel (E1, E2, E3) vorgesehen ist, und die Kante (63) ist gerade, wobei die Wand (62), zwischen der geraden Kante (63) und der das Öffnungsspiel (E1, E2, E3) vorgesehen ist, konfiguriert ist, das Spiel zu definieren.

7. Ventil nach einem der vorhergehenden Ansprüche, wobei die Klappe einen ersten Flügel (3), Verschlussflügel genannt, der es ermöglicht, das Durchlassfenster (33) zu schließen, wenn die Klappe (1) in Schließstellung ist, und einen zweiten Flügel (4), anderer Flügel genannt, aufweist, der es ermöglicht, den ersten Kanal (31) zumindest teilweise zu schließen, wenn die Klappe (1) in Öffnungsstellung ist.

8. Ventil nach Anspruch 7, wobei die Verschlussklappe (3) die gerade Kante (63) aufweist.

## Claims

1. Fluid valve, in particular for the exhaust gas from an automobile vehicle, comprising a body (30) defining at least one duct (32) and a movable flap (1) that can rotate about a shaft (16) between a so-called closed position preventing the fluid from flowing through the duct (32) and an open position allowing the fluid to flow through the duct (32), the valve including an opening clearance (E1, E2, E3) between the flap (1) and a wall (62) of said body (30) for the passage of the fluid, the valve comprising a main duct (31) and an auxiliary duct (32) for the flow of the fluid, discharging into said main duct (31), the main duct (31) having inlet and outlet orifices (34) adapted to communicate with the exhaust line of a motor, the auxiliary duct having an orifice (35) adapted to communicate with an exhaust gas recirculation line, the flap (1) being adapted to prevent communication between the two ducts (31, 32) in the closed position and to allow communication between said ducts (31, 32) in the open position, at the level of a fluid passage window (33), the valve being **characterized in that** said clearance (E1, E2, E3) extends in a direction parallel to the pivot shaft (16) of the flap (1) over a length that varies according to the angular position of the flap (1), and **in that** said wall (62) between which and the flap (1) said opening clearance (E1, E2, E3) is provided is situated at the level of said auxiliary duct (32).

2. Valve according to Claim 1 wherein the length of the opening clearance (E1, E2, E3) obeys one or more of the following laws:
- the length of the clearance (E1, E2, E3) is zero in the closed position of the flap,
- the length of the clearance (E1, E2, E3) increases with an angle of opening of the flap,
- the length of the clearance (E1, E2, E3) increases in a manner that is not proportional to the angle of opening of the flap,
- the length of the clearance (E1, E2, E3) increases faster at the commencement of the opening of the flap than at the end,
- the length of the clearance (E1, E2, E3) is maximum in the maximum open position of the flap.

3. Valve according to either one of Claims 1 and 2 wherein said wall (62) comprises a first portion (62a) with which the flap (1) is in contact between its open position and its closed position and a second portion (62b) extending in the direction of the pivot shaft (16) of the flap from said first portion, said second portion (62b) being less concave than said first portion so as to define said opening clearance (E1, E2, E3).

4. Valve according to Claim 3 wherein the rotation shaft (16) of the flap (1) is off-center and the flap (1) is oriented in a plane tangential to a cylinder centered on said shaft.

5. Valve according to either one of Claims 3 and 4 wherein said first portion (62a) has a profile inscribed within a cylinder the axis whereof is the rotation axis of the flap.

6. Valve according to any one of the preceding claims wherein said flap (1) has an edge (63) oriented along said pivot shaft (16) at the level of which said opening clearance (E1, E2, E3) is provided and said edge (63) is straight, the wall (62) between which and said straight edge (63) said opening clearance (E1, E2, E3) is provided being configured to define said clearance.

7. Valve according to any one of the preceding claims wherein said flap has a first, so-called gate wing (3) for closing said passage window (33) when the flap (1) is in the closed position and a second, so-called other wing (4) for at least partially closing said first duct (31) when the flap (1) is in the open position.

8. Valve according to Claim 7 wherein said gate flap (3) includes said straight edge (63).
